# EUROPEAN PATENT SPECIFICATION

(11) **EP 3 552 817 B1**
(45) Date of publication and mention of the grant of the patent: **05.05.2021**
(21) Application number: 19172128.1
(22) Date of filing: 15.09.2016
(51) Int. Cl.: B32B 5/02, B32B 5/18, B32B 5/24, B32B 13/04, B32B 13/08, B32B 13/10, B32B 13/14, B32B 21/10, B32B 21/02, F16L 59/02

(54) **INSULATION PRODUCT**
DÄMMPRODUKT
PRODUIT D'ISOLATION

(30) Priority: 16.09.2015 GB 201516401
(43) Date of publication of application: 16.10.2019
(62) Divisional of application: 16189034.8
(73) Proprietor: Knauf Insulation SPRL, 4600 Visé (BE)
(72) Inventor: SEILER, Albert, 1435 Mont Saint Guibert (BE); GEZ, Daniel, 1435 Mont Saint Guibert (BE)
(74) Representative: ARC-IP

(56) References cited:
- EP-A1- 2 650 118
- GB-A- 1 054 088
- US-A1- 2011 281 485

## Description

The present invention relates to an insulating product, notably a wood wool insulating panel.

Wood wool insulating panels are notably used in buildings, for example for covering ceilings or wall; the wood wool provides desirable acoustic properties and a pleasing visual appearance. For some applications, an insulating panel is formed by securing, for example a foam layer, notably expanded polystyrene (EPS), to a wood wool layer. This provides a panel which, in addition, provides desirable thermal insulating properties whilst still being light and easy to handle. One aim of the present invention is to provide further improvements to such panels. A fire retardant insulating construction panel is described in EP2650118. GB1054088 discloses a structural panel formed of a slab of lightweight materials. US2011/0281485 discloses a sheet formed from a phase change material composition.

According to one of its aspects, the present invention provides an insulating panel as defined in claim 1, and a method of manufacturing an insulating panel as defined in claim 15. The dependent claims define preferred and/or alternative embodiments.

The inventors have determined that it is possible to provide such insulating panel having improved fire resistance, notably having:
i) a fire growth rate index FIGRA which is ≤ 750 W/s, preferably ≤ 250 W/s, more preferably ≤ 120 W/s ; and/or
ii) a lateral (horizontal) flame spread which does not reach the edge of the specimen tested; and/or
iii) a total heat release of the specimen tested during the period between 300 seconds and 900 seconds of fire exposure THR₆₀₀ which is ≤ 15 MJ, preferably ≤ 7.5 MJ,
as determined by a single burning item test (SBI test) in accordance with EN 13823. Preferably, the insulating panels have features i), ii) and iii).

In a further aspect, the present invention provides an insulating panel comprising a wood wool layer secured to a thermal insulating layer, notably a foam layer, having a fire classification of at least C, preferably at least B, more preferably at least A2 according to EN 13501-1. References to the aforementioned standards are to the versions in force at the priority date of the present application. Testing is carried out with the wood wool layer as the exposed surface.

The fire resistance of previously known wood wool/foam panels has generally been no more than class E according to EN 13501-1. Despite the desirability of improving fire resistance, the industry has previously accepted this level of performance as a compromise for the other desirable properties of such insulating panels. Indeed, an acknowledged weakness of foam insulation layer is their potential flammability and it is surprising that the inventors have established a way of improving this in a wood wool/foam panel.

The inclusion of a fire resistant material positioned between the wood wool layer and the thermal insulating layer, provides an advantageous way of improving such insulating panels. Alternatively, fire resistance may be improved by:
- increasing the thickness of the wood wool layer, but this leads to either an increase of the total thickness of the product if the same thickness of thermal insulating layer is used or a decrease in thermal insulation performance if a thinner thermal insulating layer is used; or
- increasing the amount of binder used in the wood wool layer, but this detracts from desirable properties of the wood wool layer and increases the product weight; or
- incorporating flame retardants in the thermal insulating layer, but this increases cost and raises issues of ensuring non-toxicity.

The inclusion of a fire resistant material supported by a carrier material positioned between the wood wool layer and the thermal insulating layer provides a particularly advantageous way of improving such insulating panels, the carrier material being used notably to facilitate the manufacturing process, for example by permitting use of a fire resistant material which is applied in liquid form, for example as a suspension or a slurry, but which is retained as a non-flowing layer until dried. This greatly facilitates incorporation in to existing manufacturing processes whilst allowing a desirable thickness of the fire resistant material to be provided. Two, three or more fire resistant materials may be used, for example in the form of layers comprising the same or a different material. Similarly, two, three or more carrier materials may be used; these may be of the same or of a different material and may support the same or different fire resistant materials.

The fire resistant material is preferably in the form of a layer, more preferably a continuous layer, that is to say an uninterrupted or substantially uninterrupted layer which extends over the entire surface area of the thermal insulating layer. The fire resistant material may consist essentially of an oxide and/or an hydroxide, for example a fire resistant material consisting of at least 80% by weight of an oxide and/or an hydroxide. The fire resistant material may comprise, or consist essentially of, cement, Portland cement, white cement, grey cement, magnesia, caustic magnesia, silicates, gypsum or combinations thereof. It may have a thickness which is ≥ 0.5mm, ≥ 1 mm or ≥ 2mm and/or which is ≤ 8mm, ≤ 5mm or ≤ 4mm. The carrier material may be embedded within the fire resistant material. In a preferred embodiment, the wood wool layer is secured to the thermal insulating layer by the fire resistant material. The fire resistant material may be present in a quantity which is ≥ 800 g/m², ≥ 1000 g/m² or ≥ 1200 g/m³ and/or ≤ 8000 g/m², ≤ 5000 g/m², ≤ 3000 g/m² or ≤ 2000 g/m².

The carrier material may be a veil, notably a glass veil or a paper layer; it may be a woven or non-woven. The carrier material may be in the form of a sheet; it may comprise fibres, for example glass fibres, polymer fibres or cellulose fibres; it may be water absorbent. In preferred embodiments, the carrier material is adapted to be impregnated with and to support the fire resistant material when the fire resistant material is in the form of a liquid, for example in the form of a suspension or slurry, so that the fire resistant material can be easily handled by handling of the impregnated carrier material. This facilitates application of the fire resistant material to the panel. The carrier material may be in the form of a continuous layer, i.e. an uninterrupted layer, with or without open holes; it is preferably porous. The carrier material may have:
- a weight of at least 40 g/m², at least 80 g/m², at least 150 g/m², at least 200 g/m² and/or no more than 300 g/m² or no more than 250 g/m²; and/or
- a thickness of at least 0.1 mm, at least 0.5 mm and/or no more than 3 mm or no more to 1 mm.
This facilitates control of the quantity of fire resistant material incorporated in the insulating panel. The carrier material when carrying the fire resistant material may have a weight of at least 400 g/m², at least 600 g/m², at least 800 g/m² or at least 1000 g/m² and/or no more than 3000 g/m², no more than 2000 g/m², no more than 1700 g/m² or no more than 1400 g/m². The fire resistant material may make up at least 85wt%, at least 90%wt, at least 95%wt or at least 98%wt of the combined weight of the carrier material and the fire resistant material.

The carrier material may be provided and/or used in the form of a roll; this facilitates its incorporation in the manufacturing process without taking up excessive space or significantly affecting manufacturing speed. In a preferred manufacturing process, the impregnated carrier material carries and is preferably substantially saturated with the fire resistant material in the form of a liquid or suspension when applied to the panel; in this case, the fire resistant material is preferably dried to form a solid layer in a subsequent step. In such a process it is best not to impregnate the carrier material with too much fire resistant material to avoid losing fire resistant material from the carrier material, for example from fire resistant material dripping out during handling or being squeezed out when pressure is applied to secure the layer above the carrier material. Indeed, one particular advantage of the use of a carrier material is its ability to retain the fire resistant material in place during the manufacturing process.

The fire resistant material may be applied to the carrier material in a liquid form, notably as a suspension or dispersion, particularly a suspension or dispersion in water. A preferred application method comprises passing the carrier material through a bath containing a liquid or suspension of the fire resistant material. Excess fire resistant material may subsequently be removed, for example by squeezing the impregnated carrier material, for example using a pinch roller.

The wood wool layer comprises wood wool fibres arranged in an irregular geometry to form an open-pore, three-dimensional structure in which the wood wool fibres are held together by a binder. The wood wool fibres comprise wood wool fibres having:
- a length of at least 2.5 cm, at least 7 cm or at least 10 cm, and/or no more than 50 cm, no more than 30 cm or no more than 20 cm; and/or
- a width of at least 1 mm or at least 2 mm and/or no more than 10 mm, no more than 6 mm or no more than 4 mm; and/or
- a thickness of at least 0.1 mm or at least 0.5 mm and/or no more than 3 mm or no more than 1 mm.
Preferably such fibres make up at least 80% by weight of the wood wool fibres. The structure of the wood wool layer may have (and, in respect of the insulating panel of claim 1, has) a porosity of greater than 30% by volume, greater than 40% by volume, greater than 50% by volume or greater than 60% by volume.

The wood wool binder is preferably (and, in respect of the insulating panel of claim 1, is) an inorganic binder; it may comprise cement, Portland cement, white cement, grey cement, alumina cement, magnesia, caustic magnesia, silicates, gypsum or mixtures thereof. In a preferred embodiment, the binder comprises or consists essentially of the same material as the fire resistant material; this facilitates production and facilitates adhesion between layers of the panel. The amount of binder in the wood wool layer may be at least 50%wt, at least 60%wt, at least 70%wt, at least 80%wt and/or at least 90%wt based on the total weight of the wood wool layer. In a preferred embodiment, the binder is substantially homogeneously distributed in the wood wool layer, notably the difference of binder content between a sample of the centre of the wood wool layer and a sample of one side of the wood wool layer is less than 5%.

The wood wool layer may be in the form of a plate, notably a plate having a substantially rectangular shape. The wood wool layer may have a thickness which is ≥ 3 mm or ≥ 4 mm and/or ≤ 30 mm, ≤ 20mm, ≤ 15mm, ≤ 12mm, ≤ 10mm or ≤ 8mm.

The insulating panel may comprise a thermal insulating layer, notably a foam layer, sandwiched between first and second wood wool layers. In this case, the fire resistant material may be provided either between the thermal insulating layer and a single wood wool layer or between the thermal insulating layer and each of the wood wool layers. In a preferred embodiment, the insulating product comprises a single wood wool layer and a single thermal insulating layer.

The thermal insulating layer may comprise or consist essentially of a non-fire resistant material, notably a layer or material which, by itself, has:
i) a fire growth rate index FIGRA which is ≥ 1000 W/s ; and/or
ii) a lateral (horizontal) flame spread which reaches the edge of the specimen tested; and/or
iii) a total heat release of the specimen tested during the period between 300 seconds and 900 seconds of fire exposure THR₆₀₀ which is ≥ 20 MJ, and/or
iv) fails to meet any of classes A1, A2 or B in accordance with EN 13823, and/or
v) fails to meet class C and/or D and or E in accordance with EN 13823.
The thermal insulating layer may have a lambda value (λ) which is ≤ 50 mW/m.K, ≤ 45 mW/m.K, ≤ 40 mW/m.K, ≤ 35 mW/m.K, ≤ 32 mW/m.K or ≤ 30 mW/m.K.

Preferably, the thermal insulating layer has a density which is: ≤ 60 kg/m³, ≤ 55 kg/m³, ≤ 50 kg/m³, ≤ 45 kg/m³, ≤ 40 kg/m³ or ≤ 35 kg/m³ and/or which is ≥ 8 kg/m³ or ≥ 10 kg/m³.

The thermal insulating layer may have a compression strength which is ≥ 30 kPa or ≥ 50 kPa and/or ≤ 400 kPa or ≤ 300 kPa.

The thermal insulating layer may comprise (and, in respect of the insulating panel of claim 1, comprises):
- a foam layer, for example polystyrene, extruded polystyrene (XPS), expanded polystyrene (EPS), polyurethane, polyisocyanurate, an organic foam material. Preferred materials are white EPS (free of heat absorbing additives) or grey EPS (EPS comprising heat absorbing additives, notable graphite particles or aluminium particles);
   notably with any one of such material making up at least 80 wt%, preferably at least 90 wt% of the thermal insulating layer.
The thermal insulating layer may comprise:
- one or more materials selected from: fibres, cellulose, straw, textile fibres, cotton, animal wool;
   notably with any one of such material making up at least 80 wt%, preferably at least 90 wt% of the thermal insulating layer.

The thermal insulating layer may have a thickness which is ≥ 20 mm, ≥50 mm or ≥70 mm, and/or ≤ 300 mm, ≤ 220 mm or ≤ 200 mm.

The insulating panel may have:
- a width which is ≥ 30 cm, ≥ 50 cm or ≥ 60 and/or ≤ 120 cm or ≤100 cm; and/or
- a length which is ≥ 50 cm, ≥ 90 cm ≥ 100cm, ≥ 110 cm ≥ 190 cm or ≥ 220 cm and/or ≤ 300 cm or ≤ 250 cm; and/or
- a thickness which is ≥ 20 mm, ≥ 25 mm or ≥ 40 mm and/or ≤ 220 mm or ≤ 200 mm; and/or
- a lambda value which is ≤ 0.1 W/m.K, preferably ≤ 0.05 W/m.K, more preferably ≤ 0.04 W/m.K and even more preferably ≤ 0.035 W/m.K.

In a preferred manufacturing technique, the fire resistant material is applied to the panel in the form of a liquid or slurry maintained by the carrier material and subsequently dried or hardened to form a solid layer of fire resistant material. A layer of wood wool may be formed on top of the fire resistant material, notably by depositing loose wood wool fibres coated with a binder on top of the fire resistant material, compressing the wood wool fibres and allowing the binder to cure, notably by drying, to form a wood wool layer. Drying of the fire resistant material is preferably carried out at the same time as drying of the wood wool fibres to form the wood wool board. Drying may occur at room temperature, notably for duration of at least eight hours, preferably at least twelve hours.

The fire resistant material may be secured to one of, and preferably both of, the wood wool layer and the thermal insulating layer by drying of a liquid form of the fire resistant material when in contact with one or both of these layers. Alternatively, or additionally, the fire resistant material may be secured to one of, or both of, the wood wool layer and the thermal insulating layer by a separate adhesive, preferably a fire resistant adhesive. For example, a liquid form of the fire resistant material supported by a carrier material may be applied to the thermal insulating layer and allowed to dry so as to secure the fire resistant material and the thermal insulating layer together, and the wood wool layer may be subsequently secured thereto using an adhesive. Alternatively, a liquid form of the fire resistant material supported by a carrier material may be applied to the wood wool layer and allowed to dry so as to secure the fire resistant material and the wood wool layer together, and the thermal insulating layer may be subsequently secured thereto using an adhesive.

In the present application, the term "consist essentially of" is intended to limit a definition or the scope of a claim to the specified materials or steps and those that do not materially affect the basic and novel characteristic(s) of the claimed invention.

An embodiment of the invention will now be described, by way of example only, with reference to the accompanying drawing of which:
Fig. 1 is a partially cut away perspective view of an insulating panel;
Fig. 2 is a schematic view of a process of manufacturing an insulating panel.

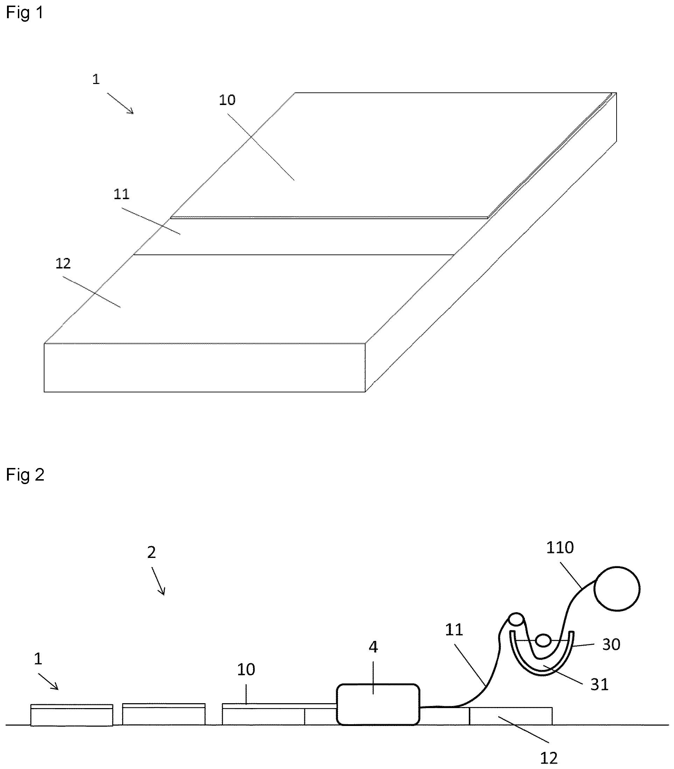

The insulating panel 1 of Fig 1 comprises a wood wool layer 10 secured to a thermal insulating layer, specifically an expanded polystyrene foam ("EPS") layer 12, by a layer of fire resistant material 11 comprising a layer of cement having an embedded glass veil.

As shown in Fig 2, a continuous roll of non-woven glass veil 11 having a weight of about 80 g/m², a thickness of about 0.5mm and a width of about 62 cm is passed through a bath 30 comprising a suspension of the fire resistant material and positioned on top of a series of EPS panels 12 advancing along a production line. The glass veil 110 is impregnating with a suspension 31 of the fire resistant material comprising white cement in water so that the impregnated glass veil 11 has a weight of about 800 to 1200 g/m² and a thickness of about 1 mm. The movement of the EPS panels 12 along the production line may be used to pull the veil 110 through the reservoir 30.

A collection of wood wool fibres coated with a white cement binder is subsequently deposited by a wood wool fibres depositing apparatus 4 over the fire resistant material 11 to form a wood wool layer. The panels are then cut to length, stacked under pressure and dried to form wood wool/EPS panels having a layer of wood wool about 5mm thick and a continuous layer of fire resistant material 11 about 1 to 1.5 mm thick provided by the cement, the glass veil carrier being incorporated in the cement layer.

The layer of cement 11 also secures the wood wool layer 10 to the EPS layer 12.

## Claims

1. An insulating panel (1) comprising a wood wool layer secured to a thermal insulating layer (12), in which
- the wood wool layer (10) comprises wood wool fibres held together by an inorganic binder and arranged in an irregular geometry to form an open-pore, three-dimensional structure having a porosity of greater than 30% by volume; and
- the thermal insulating layer (12) comprises a foam layer,
**characterised in that** a fire resistant material (11) in a quantity of between 0.8 kg/m² and 8 kg/m² is positioned between the wood wool layer and the thermal insulating layer, notably a fire resistant material comprising cement, Portland cement, white cement, grey cement, magnesia, caustic magnesia, silicates, gypsum or combinations thereof.

2. The insulating panel (1) according to claim 1, wherein the thermal insulating layer (12) consists of a foam layer.

3. The insulating panel (1) according to claim 1 or claim 2, wherein the foam layer comprises EPS, XPS, white EPS or grey EPS.

4. The insulating panel (1) according to any preceding claim, wherein the fire resistant material (11) comprises a material selected from the group consisting of cement, white cement, grey cement, magnesia, caustic magnesia, silicates, gypsum and combinations thereof.

5. The insulating panel (1) according to any preceding claim, wherein the inorganic binder comprises the same material as the fire resistant material (11).

6. The insulating panel (1) in accordance with any preceding claim, wherein the fire resistant material (11) has a thickness which is ≥ 0.5mm, ≥ 1mm or ≥ 2mm and/or which is ≤ 8mm, ≤ 5mm or ≤ 4mm.

7. The insulating panel (1) according to any preceding claim, wherein the wood wool layer (10) has a thickness in the range 3 mm to 30 mm and the thermal insulating layer (12) has a thickness in the range 20 mm to 300 mm.

8. The insulating panel (1) according to any preceding claim, wherein the fire resistant material (11) is in the form substantially uninterrupted layer which extends over the entire surface area of the thermal insulating layer (12).

9. The insulating panel (1) according to any preceding claim, wherein the fire resistant material (11) provides a substantially continuous layer between the wood wool layer (10) and the thermal insulating layer (12) having a thickness in the range 0.5 mm to 5 mm.

10. The insulating panel (1) in accordance with any preceding claim, wherein the wood wool fibres comprise wood wool fibres having:
- a length of at least 2.5 cm, at least 7 cm or at least 10 cm, and/or no more than 50 cm, no more than 30 cm or no more than 20 cm; and/or
- a width of at least 1 mm or at least 2 mm and/or no more than 10 mm, no more than 6 mm or no more than 4 mm; and/or
- a thickness of at least 0.1 mm or at least 0.5 mm and/or no more than 3 mm or no more than 1 mm.

11. The insulating panel (1) in accordance with any preceding claim, wherein the thermal insulating layer has a density which is: ≤ 60 kg/m³, ≤ 55 kg/m³, ≤ 50 kg/m³, ≤ 45 kg/m³, ≤ 40 kg/m³ or ≤ 35 kg/m³ and/or which is ≥ 8 kg/m³ or ≥ 10 kg/m³.

12. The insulating panel (1) according to any preceding claim, wherein the insulating product has a fire growth rate index FIGRA ≤ 250 W/s, preferably ≤ 120 W/s as determined by a single burning item test (SBI test) in accordance with EN 13823 and notably the insulating product has a fire classification of at least C, preferably at least B, according to EN 13501-1.

13. The insulating panel (1) according to any preceding claim, wherein the insulating panel (1) has a thermal insulation (lambda) of less than 0.1 W/m.K., preferably less than 0.05 W/m.K., more preferably less than 0.04 W/m.K.

14. The insulating panel (1) according to any preceding claim, wherein the insulating product comprises a further wood wool layer, the thermal insulating layer (12) being positioned between the wood wool layer (10) and the further wood wool layer.

15. A method of manufacturing an insulating panel (1), notably the insulating panel (1) in accordance with any of claims 1 to 14, comprising a wood wool layer (10) secured to a thermal insulating layer (12) comprising:
- applying a fire resistant material in a liquid form (11) to a first layer selected from a wood wool layer (10) and a thermal insulating layer (12), the fire resistant material being selected from the group consisting of cement, white cement, grey cement, magnesia, caustic magnesia, silicates, gypsum and combination thereof;
- subsequently applying a second layer selected from a wood wool layer (10) and a thermal insulating layer (12) over the fire resistant material (11) in a liquid form to form a sandwich structure comprising the fire resistant material (11) in a liquid form sandwiched between a wood wool layer (10) and a thermal insulating layer (12);
- subsequently drying the fire resistant material in a liquid form so as to form a fire resistant layer sandwiched between and bonded to the wood wool layer (10) and to the thermal insulating layer (12).

## Patentansprüche

1. Isolierungsplatte (1), umfassend eine Holzwollschicht befestigt an einer Wärmeisolierungsschicht (12), in welcher
- die Holzwollschicht (10) Holzwollfasern umfasst, welche durch ein anorganisches Bindemittel zusammengehalten werden und in einer unregelmäßigen Geometrie angeordnet sind, um eine offenporige, dreidimensionale Struktur mit einer Porosität größer als 30 Volumen-% zu bilden; und
- die Wärmeisolierungsschicht (12) eine Schaumschicht umfasst,
**dadurch gekennzeichnet, dass** ein Feuerresistenzmaterial (11) in einer Menge zwischen 0,8 kg/m² und 8 kg/m² zwischen der Holzwollschicht und der Wärmeisolierungsschicht positioniert ist, insbesondere ein Feuerresistenzmaterial, umfassend Zement, Portlandzement, Weißzement, Grauzement, Magnesia, kaustisches Magnesia, Silikate, Gips oder Kombinationen davon.

2. Isolierungsplatte (1) nach Anspruch 1, wobei die Wärmeisolierungsschicht (12) aus einer Schaumschicht besteht.

3. Isolierungsplatte (1) nach Anspruch 1 oder Anspruch 2, wobei die Schaumschicht EPS, XPS, weißes EPS oder graues EPS umfasst.

4. Isolierungsplatte (1) nach einem der vorhergehenden Ansprüche, wobei das Feuerresistenzmaterial (11) ein Material, ausgewählt aus der Gruppe, bestehend aus Zement, Weißzement, Grauzement, Magnesia, kaustisches Magnesia, Silikate, Gips und Kombinationen davon, umfasst.

5. Isolierungsplatte (1) nach einem der vorhergehenden Ansprüche, wobei das anorganische Bindemittel das gleiche Material wie das Feuerresistenzmaterial (11) umfasst.

6. Isolierungsplatte (1) nach einem der vorhergehenden Ansprüche, wobei das Feuerresistenzmaterial (11) eine Dicke, welche ≥ 0,5 mm, ≥ 1 mm oder ≥ 2 mm ist und/oder welche ≤ 8 mm, ≤ 5 mm oder ≤ 4 mm ist, aufweist.

7. Isolierungsplatte (1) nach einem der vorhergehenden Ansprüche, wobei die Holzwollschicht (10) eine Dicke im Bereich 3 mm bis 30 mm aufweist und die Wärmeisolierungsschicht (12) eine Dicke im Bereich 20 mm bis 300 mm aufweist.

8. Isolierungsplatte (1) nach einem der vorhergehenden Ansprüche, wobei das Feuerresistenzmaterial (11) in der Form einer im Wesentlichen ununterbrochenen Schicht ist, welche sich über die komplette Oberfläche der Wärmeisolierungsschicht (12) erstreckt.

9. Isolierungsplatte (1) nach einem der vorhergehenden Ansprüche, wobei das Feuerresistenzmaterial (11) eine im Wesentlichen durchgehende Schicht zwischen der Holzwollschicht (10) und der Wärmeisolierungsschicht (12) mit einer Dicke im Bereich 0,5 mm bis 5 mm bereitstellt.

10. Isolierungsplatte (1) nach einem der vorhergehenden Ansprüche, wobei die Holzwollfasern, Holzwollfasern mit:
- einer Länge von mindestens 2,5 cm, mindestens 7 cm oder mindestens 10 cm, und/oder nicht mehr als 50 cm, nicht mehr als 30 cm oder nicht mehr als 20 cm; und/oder
- einer Breite von mindestens 1 mm oder mindestens 2 mm und/oder nicht mehr als 10 mm, nicht mehr als 6 mm oder nicht mehr als 4 mm; und/oder
- eine Dicke von mindestens 0,1 mm oder mindestens 0,5 mm und/oder nicht mehr als 3 mm oder nicht mehr als 1 mm,
umfassen.

11. Isolierungsplatte (1) nach einem der vorhergehenden Ansprüche, wobei die Wärmeisolierungsschicht eine Dichte aufweist, welche: ≤ 60 kg/m³, ≤ 55 kg/m³, ≤ 50 kg/m³, ≤ 45 kg/m³, ≤ 40 kg/m³ oder ≤ 35 kg/m³ ist und/oder welche ≥ 8 kg/m³ oder ≥ 10 kg/m³ ist.

12. Isolierungsplatte (1) nach einem der vorhergehenden Ansprüche, wobei das Isolierungsprodukt einen Feuerwachstumsratenindex FIGRA ≤ 250 W/s, bevorzugt ≤ 120 W/s, bestimmt durch einen Einzelbrennobjekttest (SBI-Test) gemäß EN 13823, aufweist und insbesondere das Isolierungsprodukt eine Feuerklassifikation von mindestens C, bevorzugt mindestens B, nach EN 13501-1 aufweist.

13. Isolierungsplatte (1) nach einem der vorhergehenden Ansprüche, wobei die Isolierungsplatte (1) eine Wärmeisolation (Lambda) weniger als 0,1 W/m.K., bevorzugt weniger als 0,05 W/m.K., bevorzugter weniger als 0,04 W/m.K. aufweist.

14. Isolierungsplatte (1) nach einem der vorhergehenden Ansprüche, wobei das Isolierungsprodukt eine weitere Holzwollschicht umfasst, wobei die Wärmeisolierungsschicht (12) zwischen der Holzwollschicht (10) und der weiteren Holzwollschicht positioniert ist.

15. Verfahren zur Herstellung einer Isolierungsplatte (1), insbesondere der Isolierungsplatte (1) gemäß einer der Ansprüche 1 bis 14, umfassend eine Holzwollschicht (10) befestigt an einer Wärmeisolierungsschicht (12), umfassend:
- Aufbringen eines Feuerresistenzmaterials in Flüssigform (11) auf eine erste Schicht, ausgewählt aus einer Holzwollschicht (10) und einer Wärmeisolierungsschicht (12), wobei das Feuerresistenzmaterial ausgewählt ist, aus der Gruppe, bestehend aus Zement, Weißzement, Grauzement, Magnesia, kaustisches Magnesia, Silikate, Gips und Kombinationen davon;
- anschließendes Aufbringen einer zweiten Schicht, ausgewählt aus einer Holzwollschicht (10) und einer Wärmeisolierungsschicht (12), über das Feuerresistenzmaterial (11) in Flüssigform, um eine Sandwichstruktur zu bilden, umfassend das Feuerresistenzmaterial (11) in Flüssigform eingebettet zwischen einer Holzwollschicht (10) und einer Wärmeisolierungsschicht (12);
- anschließendes Trocknen des Feuerresistenzmaterials in Flüssigform, um so ein Feuerresistenzmaterial eingebettet zwischen und gebunden an der Holzwollschicht (10) und der Wärmeisolierungsschicht (12) zu bilden.

## Revendications

1. Panneau d'isolation (1) comprenant une couche de laine de bois fixée à une couche d'isolation thermique (12), dans lequel
- la couche de laine de bois (10) comprend des fibres de laine de bois maintenues ensembles par un liant inorganique et disposées en une géométrie irrégulière pour former une structure tridimensionnelle à pores ouverts ayant une porosité supérieure à 30% en volume, et
- la couche d'isolation thermique (12) comprend une couche de mousse,
**caractérisé en ce qu'**un matériau résistant au feu (11) dans une quantité comprise entre 0,8 kg/m² et 8kg/m² est positionné entre la couche de laine de bois et la couche d'isolation thermique, notamment un matériau résistant au feu comprenant du ciment, du ciment Portland, du ciment blanc, du ciment gris, de la magnésie, de la magnésie caustique, des silicates, du gypse ou des combinaisons de ceux-ci.

2. Panneau d'isolation (1) selon la revendication 1, dans lequel la couche d'isolation thermique (12) consiste en une couche de mousse.

3. Panneau d'isolation (1) selon la revendication 1 ou la revendication 2, dans lequel la couche de mousse comprend du polystyrène expansé (PSE), du polystyrène extrudé (PSX), du polystyrène expansé blanc ou du polystyrène expansé gris.

4. Panneau d'isolation (1) selon l'une quelconque revendication précédente, dans lequel le matériau résistant au feu (11) comprend un matériau sélectionné parmi le groupe consistant en du ciment, du ciment blanc, du ciment gris, de la magnésie, de la magnésie caustique, des silicates, du gypse et des combinaisons de ceux-ci.

5. Panneau d'isolation (1) selon l'une quelconque revendication précédente, dans lequel le liant inorganique comprend le même matériau que le matériau résistant au feu (11).

6. Panneau d'isolation (1) selon l'une quelconque revendication précédente, dans lequel le matériau résistant au feu (11) a une épaisseur qui est ≥ 0,5 mm, ≥ 1 mm ou ≥ 2 mm et/ou qui est ≤ 8 mm, ≤ 5 mm ou ≤ 4mm.

7. Panneau d'isolation (1) selon l'une quelconque revendication précédente, dans lequel la couche de laine de bois (10) a une épaisseur dans la gamme de 3 mm à 30 mm et la couche d'isolation thermique (12) a une épaisseur dans la gamme de 20 mm à 300 mm.

8. Panneau d'isolation (1) selon l'une quelconque revendication précédente, dans lequel le matériau résistant au feu (11) est sous la forme d'une couche substantiellement ininterrompue qui s'étend sur l'entière aire de surface de la couche d'isolation thermique (12).

9. Panneau d'isolation (1) selon l'une quelconque revendication précédente, dans lequel le matériau résistant au feu (11) fournit une couche substantiellement continue entre la couche de laine de bois (10) et la couche d'isolation thermique (12) ayant une épaisseur dans la gamme de 0,5 mm à 5 mm.

10. Panneau d'isolation (1) selon l'une quelconque revendication précédente, dans lequel les fibres de laine de bois comprend fibres de laine de bois ayant :
- une longueur d'au moins 2,5 cm, au moins 7 cm ou au moins 10 cm, et/ou pas plus de 50 cm, pas plus de 30 cm ou pas plus de 20 cm ; et/ou
- une largeur d'au moins 1 mm ou au moins 2 mm et/ou pas plus de 10 mm, pas plus de 6 mm ou pas plus de 4 mm ; et/ou
- une épaisseur d'au moins 0,1 mm ou au moins 0,5 mm et/ou pas plus de 3 mm ou pas plus de 1 mm.

11. Panneau d'isolation (1) selon l'une quelconque revendication précédente, dans lequel la couche d'isolation thermique a une densité qui est : ≤ 60 kg/m³, ≤ 55 kg/m³, ≤ 50 kg/m³, ≤ 45 kg/m³, ≤ 40 kg/m³ ou ≤ 35 kg/m³ et/ou qui est ≥ 8 kg/m³ ou ≥ 10 kg/m³.

12. Panneau d'isolation (1) selon l'une quelconque revendication précédente, dans lequel le produit d'isolation a un indice de taux de croissance du feu FIGRA ≤ 250 W/s, de préférence ≤ 120 W/s tel que déterminé par un test d'un objet isolé en feu (test OIF) selon EN 13823 et notamment le produit d'isolation a un classement au feu d'au moins C, de préférence d'au moins B, selon EN13501-1.

13. Panneau d'isolation (1) selon l'une quelconque revendication précédente, dans lequel le panneau d'isolation (1) a une isolation thermique (lambda) inférieure à 0,1 W/m.K., de préférence inférieure à 0,05 W/m.K., plus préférablement inférieure à 0,04 W/m.K.

14. Panneau d'isolation (1) selon l'une quelconque revendication précédente, dans lequel le produit d'isolation comprend en outre une autre couche de laine de bois, la couche d'isolation thermique (12) étant positionnée entre la couche de laine de bois (10) et l'autre couche de laine de bois.

15. Procédé de fabrication d'un panneau d'isolation (1), notamment un panneau d'isolation (1) selon l'une quelconque des revendications 1 à 14, comprenant une couche de laine de bois (10) fixée à une couche d'isolation thermique (12) comprenant :
- appliquer un matériau résistant au feu sous forme liquide (11) sur une première couche sélectionnée parmi une couche de laine de bois (10) et une couche d'isolation thermique (12), le matériau résistant au feu étant sélectionné parmi le groupe consistant en du ciment, du ciment blanc, du ciment gris, de la magnésie, de la magnésie caustique, des silicates, du gypse et des combinaisons de ceux-ci ;
- successivement appliquer une seconde couche sélectionnée parmi une couche de laine de bois (10) et une couche d'isolation thermique (12) par-dessus le matériau résistant au feu sous forme liquide (11) pour former une structure en sandwich comprenant le matériau résistant au feu sous forme liquide (11) mis en sandwich entre une couche de laine de bois (10) et une couche d'isolation thermique (12) ;
- successivement sécher le matériau résistant au feu sous forme liquide afin de former une couche résistante au feu mise en sandwich et liée à la couche de laine de bois (10) et à la couche d'isolation thermique (12).
